# EUROPEAN PATENT APPLICATION

(11) **EP 4 825 932 A1**
(43) Date of publication of application: **21.10.2026**
(21) Application number: 25171458.0
(22) Date of filing: 18.04.2025
(51) Int. Cl.: C09D 11/322, C09D 11/54, B41M 5/00

(54) **IMAGE RECORDING METHOD FOR MANUFACTURING PRINTED CORRUGATED CARDBOARD**

(71) Applicant: AGFA NV, 2640 Mortsel (BE)
(72) Inventor: BERTELS, Ellen, 2640 Mortsel (BE); VAN AERT, Hubertus, 2640 Mortsel (BE)
(74) Representative: Lingier, Stefaan Frans L.

(57) **Abstract**

A method of producing a printed corrugated cardboard and ink set therefore, the method including the steps of
i. Providing a continues paper web; and
ii. Adhering an aqueous ink onto a first surface of the paper web by means of an inkjet print head to obtain a printed paper web, the aqueous ink comprising a pigment, a polyoxyethylene glycol alkyl ether, a water-soluble organic solvent in an amount equal to 1.5 wt.% or more and equal to 37 wt.% or less with respect to the total weight of the ink; and
iii. Joining the printed paper web together with a corrugated paper medium by contacting the surface opposite to the first surface of the printed paper web with a surface of the corrugated paper medium.

## Description

### Technical Field

The present invention relates to an image recording method for manufacturing printed corrugated cardboard at high printing speeds. Suitable inkjet ink compositions to achieve this recording method are provided.

### Background Art

Corrugated cardboard is a preferred packaging material as it is low cost and lightweight. Lightweight packaging material reduces transportation costs and facilitates the handling during delivery to the customer. A further benefit is that corrugated cardboard boxes are stackable, making them easy to store, transport and recycle.

Corrugated cardboard is formed by gluing one or more fluted sheets of paperboard (also called corrugating paper medium) to one or more flat sheets of linerboard (also called facings). Commonly, two types of corrugated card board are used as packaging material: single face cardboard with one corrugated paper medium glued to one facing (total two sheets) and single wall card board with one corrugated paper medium sandwiched between two facings (total three sheets).

The main part of the used corrugated board for packaging applications requires a decorative appearance or requires information and /or coding, which is typically achieved by printing an image, text or (bar or QR) codes. Most of the corrugated board for packaging applications is printed by analogue flexographic printing, either in single or in multiple colors. The manufacturing of the printing cylinder, which is required for flexographic printing, is very complex and costly and therefore can be economically justified only at high numbers of the printed parts of the same design. As soon as any change in the printing design is required, new printing cylinders need to be manufactured. The cylinders may be stored to avoid making new ones, however this requires large storage room.

When the number of printed samples is low or variable data must be printed, digital printing is an industrially relevant method.

Inkjet printing is a suitable method for applying digitally a print on corrugated board, particularly when the so-called pre-print technique, wherein the print is applied to a paper liner before the manufacturing of the corrugated board, is used.

A newer method is the integration of a digital printing unit (typically an inkjet printing unit) into a corrugated board manufacturing machine, such as a corrugator or a corrugated board production line (see e.g. DE 10 2013 202 871A1 or WO 2014/128115 A1). This method has advantages as compared to the analogue flexography printing in regard of the manufacturing costs and in production flexibility.

However, in-line digital printing in a corrugated board production line requires inks with exceptional requirements, like high frequency jetting reliability, good drying performance, high stability, good wetting performance on a wide range of substrates and a low content of volatile organic solvents. Corrugation production lines run a very high speed (corresponding with paper conveying speeds up to 450 m/min). Consequently, the amount of inkjet ink which is jetted onto the paper web is huge. Inkjet ink does contain a substantial amount of volatile organic solvent to avoid clogging of the nozzles of the inkjet print head. The combination of high production speed and the substantial amount of volatile organic solvent in the inkjet inks, leads to high emission of volatile organic solvents in the press room and exhausts of the card board production facility, representing health and safety issues.

In a corrugated board production line, the gluing step of the corrugated medium with the card board liner takes place at high temperature (160°C and more). Because the printed image of a card board liner comes into contact with heated rollers or plates at these temperatures, the printed images must show a high heat resistance to avoid smearing out of the colors or mechanical damage.

EP2230281A discloses ink compositions having a latex having a high glass transition temperature and an organic solvent having a SP value of 27.5 or lower in order to avoid staining of rollers when the printed images are fixed by heat and pressure.

US 2017/0183522A discloses an aqueous ink composition with at least 2 surfactants and a binder, the second surfactant being a polysorbate, a polyoxyethylene glycol ether or perfluoropolyether to improve decap performance into thermal inkjet heads, durability and gamut of printed images.

US 2017/0066940A discloses a CMYK ink set wherein the inks comprise a polyoxyethylene glycol ether surfactant and a polyurethane binder. Improvements in color shift are claimed.

US2014077486A discloses ink compositions comprising penetrants to shorten the drying time of the ink adhered to a recording medium. However, because penetrants also promote penetration of the colorants into the paper substrate, a polymer compound is added to avoid lower image density.

Most of the above cited prior art has in common that polymers have to be included in the aqueous ink jet ink. It is known that polymers have the tendency to form coatings and films which have a negative effect on the jetting reliability due to blocking of nozzles of the print head, film formation in the ink tanks and tubes.

There is still a need for a method for manufacturing printed corrugated cardboard at high-speed image producing printed images which withstand contact with heated rollers and plates and wherein the emission of volatile organic solvents does not represent environmental, health and/or safety issues.

### Summary of invention

It is the objective of the present invention to provide a solution to the above stated problems. The objective has been achieved by providing a method of producing a printed corrugated cardboard image recording method as defined in claim 1.

It is a further aspect of the present invention to provide an ink set comprising a pre-treatment liquid and an aqueous inkjet ink as defined in Claim 14.

Other features, elements, steps, characteristics and advantages of the present invention will become more apparent from the following detailed description of preferred embodiments of the present invention. Specific embodiments of the invention are also defined in the dependent claims. claims.

### Brief description of the figures

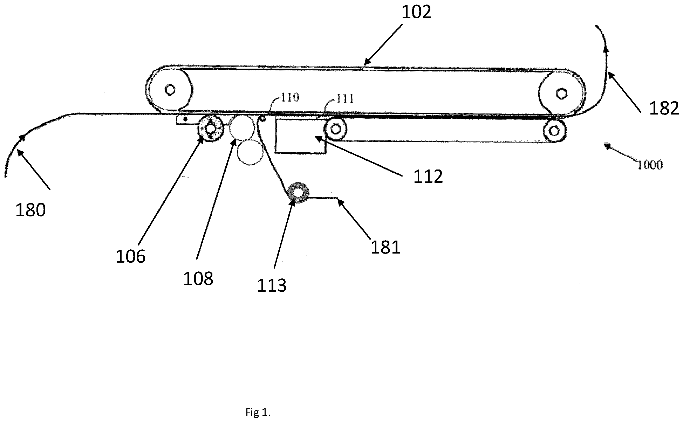

Fig. 1 shows an apparatus for contacting the surface opposite to the first surface of the printed paper web with a surface of the corrugated paper medium by pressing the printed paper web with the corrugated paper medium by means of a pressing device comprising an endlessly driven pressure belt.

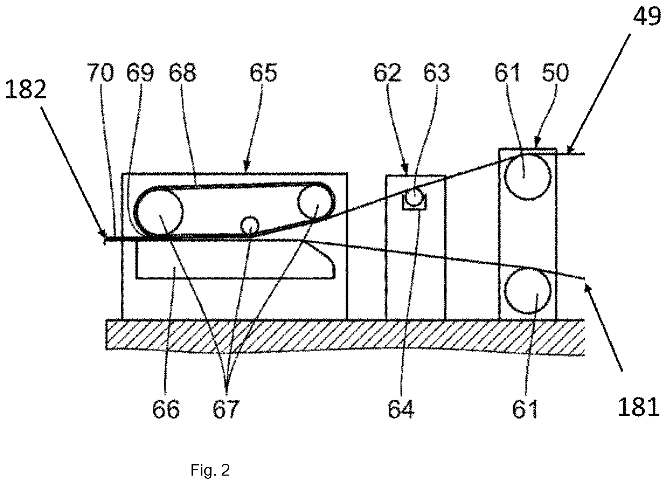

Fig. 2 shows an apparatus for contacting the surface opposite to the first surface of the printed paper web with a surface of the corrugated paper medium by pressing the printed paper web with the corrugated paper medium by means of a heating and pressing device comprising heating plates and an endlessly driven pressure belt.

### Description of embodiments

### A. Image recording method

The method of producing a printed corrugated cardboard according to the invention, includes the steps of
i. Providing a continues paper web; and
ii. Adhering an aqueous ink to a first surface of the paper web by means of an inkjet print head to obtain a printed paper web, the aqueous ink comprising a pigment, a water-soluble organic solvent in an amount equal to 1.5 wt.% or more and equal to 37 wt.% or less with respect to the total weight of the ink, and a polyoxyethylene glycol alkyl ether; and
iii. Joining the printed paper web together with a corrugated paper medium by contacting the surface opposite to the first surface of the printed paper web with a surface of the corrugated paper medium.

### A.1. Aqueous inkjet ink

The aqueous inkjet ink which is adhered to a first surface of a paper web in the production method according to the invention comprises a pigment, a water-soluble organic solvent in an amount equal to 1.5 wt.% or more and equal to 37 wt.% or less with respect to the total weight of the ink, and a polyoxyethylene glycol alkyl ether.

It has been observed that due to the specific combination of water, a water-soluble organic solvent and a polyoxyethylene glycol alkyl ether, an excellent jetting reliability of the ink is achieved and the printed images on card board liner with this ink do show a high heat resistance making the ink very suitable for the production of printed corrugated card board.

### <Pigment>

The pigment in the aqueous inkjet ink according to the invention may be black, white, cyan, magenta, yellow, red, orange, violet, blue, green, brown, mixtures thereof, and the like. A color pigment may be chosen from those disclosed by HERBST, Willy, et al. Industrial Organic Pigments, Production, Properties, Applications. 3rd edition. Wiley - VCH, 2004. ISBN 3527305769.

Suitable pigments for the invention are disclosed in paragraphs [0128] to [0138] of WO 2008/074548.

The pigment used in the present invention is not particularly limited and may be either an organic pigment or an inorganic pigment and may also be used in the form of a mixture of these pigments.

Examples of the organic pigment include at least one pigment selected from the group consisting of condensed polycyclic pigments such as anthraquinone-based pigments, quinacridone-based pigments, indigo-based pigments, dioxazine-based pigments, perylene-based pigments, perinone-based pigments, isoindolinone-based pigments, isoindoline-based pigments, phthalocyanine-based pigments, quinophthalone-based pigments and diketopyrrolopyrrole-based pigments, and azo-based pigments such as diazo-based pigments and condensed azo-based pigments. Of these organic pigments, from the viewpoint of improving color reproducibility thereof, preferred is at least one pigment selected from the group consisting of quinacridone-based pigments, azo-based pigments and phthalocyanine-based pigments.

Specific examples of the quinacridone-based pigments that are capable of exhibiting a magenta color include C.I. PR (Pigment Red) 122, PR 192, PR 202, PR 207 and PR 209; and C.I. PV (Pigment Violet) 19, etc. Of these quinacridone-based pigments, preferred is at least one pigment selected from the group consisting of C.I. PR 122, C.I. PV 19. Specific examples of the azo-based pigments that are capable of exhibiting a yellow color include C.I. PY (Pigment Yellow) 74, PY 151, PY 154, PY 155, PY 180 and PY 213. Of these azo-based pigments, preferred is at least one pigment selected from the group consisting of C.I. PY 74, C.I. PY154 and C.I. PY 155. Specific examples of the phthalocyanine-based pigments that are capable of exhibiting a cyan color or a green color include C.I. PB (Pigment Blue) 15:1, PB 15:2, PB 15:3, PB 15:4, PB 15:5, PB 15:6 and PB 16; and C.I. PG (Pigment Green) 7 and PG 36. Of these phthalocyanine pigments, from the viewpoint of well exhibiting a cyan color, preferred is at least one pigment selected from the group consisting of C.I. PB 15:3 and C.I. PB 15:4.

The organic pigment may also include a derivative of the organic pigment as a raw material thereof. The organic pigment derivative may be produced by conducting such a treatment in which a functional group such as a hydroxy group, a carboxy group, a carbamoyl group, a sulfo group, a sulfonamide group and a phthalimidomethyl group is bonded to the surface of the organic pigment.

Examples of the inorganic pigment include carbon blacks and metal oxides such as alumina and titanium dioxide. These inorganic pigments may be treated with a conventionally known hydrophobization agent such as a titanium coupling agent, a silane coupling agent and a higher fatty acid metal salt, etc.

The carbon blacks are preferably used for black inks. Examples of the carbon blacks include furnace blacks, gas black, thermal lamp blacks, acetylene blacks and channel blacks, and the carbon blacks may also be surface-treated carbon blacks.

The pigment particles are preferably dispersed in an aqueous medium using a polymeric dispersant, a surfactant or a combination thereof or encapsulated by a crosslinked polymeric shell. Self-dispersible pigments can also be used. The latter prevents interaction of the polymeric dispersant with the dispersing groups of binders or capsules which may be included in the inkjet ink (see below).

A self-dispersible pigment is a pigment having on its surface covalently bonded anionic hydrophilic groups or salt-forming groups, that allow the pigment to be dispersed in an aqueous medium without using a surfactant or a resin.

The technology for making self-dispersible pigments is well-known. For example, EP1220879A discloses pigments having attached a) at least one steric group and b) at least one organic ionic group and at least one amphiphilic counterion, wherein the amphiphilic counterion has a charge opposite to that of the organic ionic group that are suitable for inkjet inks. Also EP906371A discloses suitable surface-modified colored pigment having attached hydrophilic organic groups containing one or more ionic groups or ionizable groups. Suitable commercially available self-dispersible color pigments are, for example, the CAB-O-JET^{™} inkjet colorants from CABOT.

Pigment particles in inkjet inks should be sufficiently small to permit free flow of the ink through the inkjet-printing device, especially at the ejecting nozzles. It is also desirable to use small particles for maximum color strength and to slow down sedimentation.

The pigment particles may also be dispersed in an aqueous medium using a polymeric dispersant, a surfactant or a combination thereof.

Suitable polymeric dispersants are copolymers of two monomers but they may contain three, four, five or even more monomers. The properties of polymeric dispersants depend on both the nature of the monomers and their distribution in the polymer. Co-polymeric dispersants preferably have the following polymer compositions:
- statistically polymerized monomers (e.g. monomers A and B polymerized into ABBAABAB);
- alternating polymerized monomers (e.g. monomers A and B polymerized into ABABABAB);
- gradient (tapered) polymerized monomers (e.g. monomers A and B polymerized into AAABAABBABBB);
- block copolymers (e.g. monomers A and B polymerized into AAAAABBBBBB) wherein the block length of each of the blocks (2, 3, 4, 5 or even more) is important for the dispersion capability of the polymeric dispersant;
- graft copolymers (graft copolymers consist of a polymeric backbone with polymeric side chains attached to the backbone); and
- mixed forms of these polymers, e.g. blocky gradient copolymers.

Suitable dispersants are DISPERBYK^{™} dispersants available from BYK CHEMIE, JONCRYL^{™} dispersants available from BASF and SOLSPERSE^{™} dispersants available from Lubrizol. Other suitable dispersants are Edaplan 482 from Münzing. A detailed list of non-polymeric as well as some polymeric dispersants is disclosed by MC CUTCHEON. Functional Materials, North American Edition. Glen Rock,N.J.: Manufacturing Confectioner Publishing Co., 1990. p.110-129.

The polymeric dispersant has preferably a number average molecular weight Mn between 500 and 30000, more preferably between 1500 and 10000.

The polymeric dispersant has preferably a weight average molecular weight Mw smaller than 100000 more preferably smaller than 50000 and most preferably smaller than 30000.

In a preferred embodiment of the invention the aqueous ink comprises a pigment which is encapsulated by means of a cross-linked polymeric shell. Encapsulated pigments provide printed images having improved physical properties such as water resistance and dry rub resistance with respect to pigments dispersed by means of un-cross-linked polymers.

Suitable encapsulated pigments are provided by Lubrizol as Diamond HSDX-dispersions, by Cabot as EPD dispersions and by Fujifilm as RxD pigment dispersions such as APD1000 and APD4000 premium dispersions.

The pigments are preferably present in the range of 0.05 to 15 %, more preferably in the range of 0.1 to 10 % by weight and most preferably in the range of 0.2 to 6 % by weight, each based on the total weight of the inkjet ink. For white inkjet inks, the white pigment is preferably present in an amount of 3% to 40% by weight of the inkjet ink, and more preferably 5% to 35%. An amount of less than 0.05% by weight cannot achieve sufficient covering power.

The average pigment particle size is preferably between 0.050 and 1 µm, more preferably between 0.070 and 0.300 µm and particularly preferably between 0.080 and 0.200 µm. Most preferably, the numeric average pigment particle size is no larger than 0.150 µm. The average particle size of pigment particles is determined with a Brookhaven Instruments Particle Sizer BI90 plus based upon the principle of dynamic light scattering.

### <Water-soluble organic solvent>

The ink composition of the invention contains at least one water-soluble organic solvent in an amount equal to 1.5 wt.% or more and equal to 37 wt.% or less, more preferably equal to 3 wt.% or more and equal to 13 wt.% or less with respect to the total weight of the ink. If the amount of water-soluble organic solvent is within these ranges, jetting reliability and low VOC emissions are achievable a high printing speeds as is common in corrugated card board production lines. Preferable water-soluble organic solvents are polyols (e.g., ethylene glycol, glycerin, 2-ethyl-2-(hydroxymethyl)-1 ,3-propanediol, tetraethylene glycol, triethylene glycol, tripropylene glycol, 1,2,4-butanetriol, diethylene glycol, propylene glycol, dipropylene glycol, butyleneglycol, 1 ,6-hexanediol, 1 ,2-hexanediol, 1 ,5-pentanediol, 1,2-pentanediol, 2,2-dimethyl-1 ,3-prapanediol, 2-methyl-2,4-pentanediol, 3-methyl-1 ,5-pentanediol, 3-methyl-1 ,3-butanediol, and 2-methyl-1 ,3-propanediol), N-hydroxyethyl-pyrrolidon, N-butyl-pyrrolidon, amines (e.g., ethanolamine, and 2-(dimethylamino)ethanol), monohydric alcohols (e.g., methanol, ethanol, and butanol), 2,2'-thiodiethanol, amides such as N,N-dimethylformamide, heterocycles such as 2-pyrrolidone and N-methyl-2-pyrrolidone, and acetonitrile.

Examples of the glycol ether include monoalkyl ethers of glycol selected from ethylene glycol, diethylene glycol, triethylene glycol, propylene glycol, dipropylene glycol, and tripropylene glycol. More specifically, triethylene glycol monomethyl ether, triethylene glycol monobutyl ether, and dipropylene glycol monopropyl ether can be preferably exemplified. Other useful examples which are listed in the Swiss list A and hence compatible with food packaging are: Propylene Glycol Monomethyl Ether; Propylene Glycol Monoethyl Ether; Propylene Glycol Monopropyl Ether; Ethylene Glycol Monobutyl Ether; Propylene Glycol Monobutyl Ether; Diethylene Glycol Monoethyl Ether; Diethylene Glycol Monobutyl Ether; Dipropylene Glycol Mono n-Propyl Ether; Dipropylene Glycol Methyl Ether; Tripropylene Glycol Monomethyl Ether. These solvents may be used alone or in combination of two or more.

In a preferred embodiment of the invention, the water-soluble organic solvent is an alkane diol. This alkane diol is incorporated in the aqueous inkjet ink to prevent drying and clogging of ejection nozzles due to aggregates formed of adhered and dried ink.

Clogging of the ejection nozzles of a print head impairs severely the jetting reliability, especially at the start-up of the printing process and during long printing jobs.

For preventing ink drying at the ejection nozzles, the alkane diol preferably has a lower vapor pressure than that of water.

Examples of the water-soluble alkane diols are ethylene glycol, propylene glycol, 1,3-propane diol, diethylene glycol, triethylene glycol, tetraethylene glycol, pentaethylene glycol, dipropylene glycol, 1,3-butanediol, 2,3-butanediol, 2-butene-1,4-diol, 2-ethyl-1,3-hexanediol, 2-methyl-2,4-pentanediol, 1,2-octanediol, 1,2-hexanediol, 1,2-pentanediol, 4-methyl-1,2-pentanediol, 2-ethyl-2-methyl-1,3-propanediol, 3,3-dimethyl-1,2-butanediol, 2,2-diethyl-1,3-propanediol, 2-ethyl-1,3-hexanediol, 2,2,4-trimethyl-1,3-pentanediol, 2-methyl-2-propyl-1,3-propanediol, 2,4-dimethyl-2,4-pentanediol, 2,5-dimethyl-2,5-hexane diol, 5-hexene-1,2-diol, 2-ethyl-1,3-hexanediol, tripropylene glycol, polypropylene glycol having the number of propylene oxide groups of greater than or equal to 4, butylene glycol, 1,6-hexanediol, pentanediol, thiodiglycol.

If the aqueous inkjet ink comprises alkane diols below the above mentioned range, the effect of drying prevention is insufficient to assure continuous ink jetting reliability and sufficient good setoff at high printing speeds. If the aqueous inkjet ink comprises alkane diols above the above mentioned range safety, health and environmental issues occur in the pressroom.

### <Polyoxyethylene glycol alkyl ether>

The amount of the polyoxyethylene glycol alkyl ether in the ink used in the production method according to the invention, is preferably equal to 0.5 wt.% or more and equal to 5 wt.% or less with respect to the total weight of the ink.

Suitable polyoxyethylene glycol alkyl ethers are polyoxyethylene lauryl ether, polyoxyethylene octyl phenyl ether, polyoxyethylene oleyl phenyl ether, polyoxyethylene nonyl phenyl ether, oxyethylene-oxypropylene block copolymer, t-octyl phenoxyethyl polyethoxyethanol, and nonylphenoxy ethyl polyethoxyethanol.

More specifically, an oleyl or stearyl type polyoxyethylene glycol alkyl ether can be included at from 0.4 wt.% to 2.5 wt.%, and can be defined by the following formulations:
Oleyl type polyoxyethylene glycol ether

C₁₈H₃₅(CH₂CH₂O)ₙH Formula I

Stearyl type polyoxyethylene glycol ether

C₁₈H₃₇(CH₂CH₂O)ₙH, Formula II

where n ranges from 2 to 20. The main difference between the oleyl type and the stearyl type polyoxyethylene glycol ether is the presence of a single "cis" unsaturated (oleyl) group along the hydrocarbon chain in Formula I, whereas the hydrocarbon chain in Formula II is fully saturated.

The oleyl type polyoxyethylene glycol ether may be obtained commercially under the trade name Brij^{®} OX, where O represent oleyl and X is from 2-20 (i.e. n of Formula I is from 2 to 100, preferably from 10 to 30). In one specific example, Brij^{®} O10 (where n=10 in Formula I) works well in accordance with examples of the present disclosure. Other examples surfactants that may be used include Brij^{®} O20 (n=20 in Formula I), Brij^{®} O2 (n=2 in Formula I), Brij^{®} O3 (n=3 in Formula I), Brij^{®}) O5 (n=5 in Formula I), etc. The stearyl type polyoxyethylene glycol ether may be obtained as a formulation sold under the trade name Brij^{®} SX, where S represent stearyl and X is from 2-20 (i.e. n of the Formula II above is from 2 to 20). Examples include Brij^{®} S10 (n=10 in Formula II), Brij^{®} S5 (n=5 in Formula II), Brij^{®} S15 (n=15 in Formula II), Brij^{®} S20 (n=20 in Formula II), Brij^{®} S2 (n=2 in Formula II), Brij^{®} S7 (n=7 in Formula II), etc. Other tradenames are e.g. Rokanol O20 = Oleyl alcohol, ethoxylated (supplied by PCC Exol).

The stearyl type polyoxyethylene glycol ether may be obtained as a formulation sold under the trade name Brij^{®} SX, where S represent stearyl and X is from 2-100 (i.e. n of the Formula II above is from 2 to 100, preferably from 10 to 30). Examples include Brij^{®} S10 (n=10 in Formula II), Brij^{®} S5 (n=5 in Formula II), Brij^{®} S15 (n=15 in Formula II), Brij^{®} S20 (n=20 in Formula II), Brij^{®} S2 (n=2 in Formula II), Brij^{®} S7 (n=7 in Formula II), etc.

When comparing different suppliers of stearyl ethoxylates of different suppliers slight differences in behavior could be found, since the alkyl length is in most cases not exactly a C₁₈ chain but a mixture with alkyl chains with a different length e.g. containing also C₁₆ chains. Furthermore, when comparing different tradenames with a different degree of ethoxylation, even though the average the degree of ethoxylation might be the same, there might be a difference in the chain length distribution. E.g. a Brij S20 does not only contain chains with 20 EO units but also chains with shorter and longer degree of ethoxylation. Besides the stearyl ethoxylates with tradename Brij^{®} SX, one can also use e.g. Sympatens AS/100 (MB) = Steareth-10 (supplied by KLK Oleo), SYMPATENS AS/200 (MB) = Steareth-20 with HLB = 15,2 (supplied by KLK Oleo), Hedicol-EM/102 (FC) (MB) = Alcohol C₁₈ ethoxylated with HLB = appr. 8 (supplied by KLK Oleo), Hedicol-EM-101 FC MB = Alcohol C₁₈ ethoxylated with HLB = appr. 9,5 (supplied by KLK Oleo), ROLFOR HT25 = Alcohols, C₁₆-₁₈, ethoxylated with HLB = appr. 16 (supplied by Lamberti) and Rokanol S20 - steareth-20 (supplied by PCC Exol)

The alkyl ethoxylate may also contain a mixture of saturated and unsaturated alkyl groups, e.g. Rokanol K21 i.e. Alcohols, C₁₆-₁₈ and C₁₈-unsatd., ethoxylated (supplied by PCC Exol).

The polyoxyethylene glycol alkyl ether can contain also other alkylene oxide units besides ethylene oxide, e.g. propylene oxide, and butylene oxide. Examples are Ecosurf LF30 = C₁₂/₁₄-(EO)10(BO)1, Ecosurf LF45 = C₁₂/₁₄-(EO)10(BO)2, Ecosurf LF20 = C₁₂/₁₄-(EO)10(BO)3 (Supplied by Dow), Plurafac LF401 = CAS regsitry number 69227-21-0 = C₁₂-₁₈-(EO/PO)n (supplied by BASF), Sympatens-ASP/150 = Alcohol C₁₈, propoxylated = CAS registry number 25231-21-4 (supplied by KLK Oleo)

If the amount is less than the above-mentioned lower limit, the effect on heat resistance of printed images is limited and image quality is insufficient due to intercolor bleeding. If the amount of the polyoxyethylene glycol alkyl ether is more than 5 wt.%, jetting reliability is severely decreased and image quality is insufficient due to severe mottle in the solids.

### <Alkyl alcohol having an alkyl group comprising 1 to 7 carbon atoms>

In a preferred embodiment of the invention, the aqueous inkjet ink comprises an alkyl alcohol having an alkyl group comprising 1 to 7 carbon atoms in an amount not less than 0.5 wt.% and not more than 5 wt.%. This alkyl alcohol improves the penetration of the ink vehicle while keeping the pigments at the surface of the paper substrate, leading to excellent color depths of the printed image.

Suitable examples of alkyl alcohols having an alkyl group comprising 1 to 7 carbon atoms are ethanol, methanol, butanol, propanol, isopropanol, iso butanol, pentanol and hexanol.

If the aqueous inkjet ink comprises alkyl alcohols below the above mentioned range, the effect of keeping the pigments at the surface of the paper substrate is insufficient to further improve color depth of the printed images and coalescence occurs in the solids of the printed image. If the aqueous inkjet ink comprises alkyl alcohols above the above mentioned range, environmental, safety and health issues in the pressroom may occur.

### < co-polymer of (meth)acrylic acid and alkyl (meth)acrylate >

The aqueous inkjet ink used in the production method according to the invention preferably comprises a co-polymer of (meth)acrylic acid and alkyl (meth)acrylate. It has been observed that the presence of this co-polymer improves the jetting reliability of the aqueous inkjet ink without negatively impacting the heat resistance of the printed images. The amount of the co-polymer of (meth)acrylic acid and alkyl (meth)acrylate is preferably equal to 0.02 wt.% or more and 1 wt.% or less, more preferably equal to 0.03 wt.% or more and equal to 1 wt.% or less with respect to the total weight of the ink.

In a more preferred embodiment of the invention, the co-polymer of (meth)acrylic acid and alkyl (meth)acrylate is a co-polymer of (meth)acrylic acid and ethyl (meth)acrylate. A suitable commercial co-polymer of (meth)acrylic acid and ethyl (meth)acrylate is BYK LP-R21675 from BYK Corp. Other suitable copolymers are alkaline soluble emulsions (ASE) or polyacrylic ester copolymers such as copolymers of ethyl acrylate and methacrylic acid and salts thereof.

The co-polymer of (meth)acrylic acid and alkyl (meth)acrylate can be fully or partially neutralized. Neutralisation of the acrylic resin can be accomplished by using an alkali metal hydroxide, ammonium hydroxide or an amine. Suitable amines to neutralize the (meth)acrylic copolymer are 2-amino-2-methyl-1-propanol, available via Advancion Sciences under the tradename AMP95, 2-amino-2-methyl-1-propanol, available via Advancion Sciences under the tradename AEPX VOX 1000, Optimine -95 (available via Advancion Sciences) containing a mixture of 3-amino-3-methylbutan-2-ol and 3-(ethylamino)-3-methyl-2-butanol, triethanol amine. Preferably an hydrolyated amine is used for the neutralisation.

### <Surfactant>

A surfactant may be added to the aqueous inkjet ink according to the invention for the purpose of ensuring wettability of the ink onto the paper substrate. Preferably, the surfactant is a non-ionic surfactant.

Examples of suitable non-ionic surfactants include acetylene glycol-based surfactants, fatty alcohol alkoxylates, modified ethoxylates, polysiloxanes and polyoxyethylene sorbitan fatty acid esters.

The acetylene glycol surfactant is preferably one or more selected from 2, 4, 7, 9-tetramethyl-5-decyne-4, 7-diol, alkylene oxide adducts of 2,4,7,9-tetramethyl-5-decyne-4, 7-diol, 2,4-dimethyl-5-decyn-4-ol, and alkylene oxide adducts of 2,4-dimethyl-5-decyn-4-ol. These are available from Nissin Chemical Industry, for example, as Olfine (registered trademark) E series, such as Olfine E1010, or from Evonik (formerly Air Products (GB)) as Surfynol (registered trademark), 104, Surfynol 465, Surfynol 61. Surfynol DF110, Dynol 604 Surfynol DF110L, Surfynol DF110D, Surfynol AD01 and ethoxylated derivatives such as CAS Registry Number 91629-35-5.

Examples of commercially available fatty alcohol alkoxylates are Hydropalat WE-series such as Hydropalat WE3120, WE3130, 3197, 3694. An example of a modified ethoxylate is Hydropalat WE3650.

The added amount of the non-ionic surfactant is determined based on the types and amounts of the water-soluble organic solvents as well as other additives, but is preferably not less than 0.01 wt.% and not more than 5 wt.% with respect to the total weight of the ink.

It is preferable that the non-ionic surfactant be contained in such an amount that the static surface tension of the ink composition may be adjusted to be within a range of from 20 mN/m to 45 mN/m, in view of performing the spreading of the ink composition satisfactorily onto the substrate, and more preferably the surfactant is contained in such an amount that the surface tension of the ink composition may be adjusted to be within a range of from 25 mN/m to 40 mN/m, and even more preferably within a range of from 25 mN/m to 35 mN/m.

When the static surface tension of the ink is within the above mentioned range, the ink is able to spread sufficiently to achieve smooth solids in the printed image and that a covering overprint varnish is also able to spread well onto the image.

### <Viscosity>

The viscosity at 32°C and 1000s⁻¹ of the aqueous ink according to the invention is preferably not less than 1.2 mPa.s and not more than 15.0 mPa.s, more preferably not more than 10 mPa.s. If the viscosity of the aqueous inkjet ink is outside the above range, inks do not fit specifications of the targeted printheads.

### <Water>

The aqueous inkjet ink has water as main component making part of the ink vehicle. The water content in the ink is preferably between 60 wt.% and 95 wt.%, more preferably between 80 wt.% and 95 wt.% with respect to the total weight of the ink. If the amount of water is below this range, there will be safety, health and environmental issues due to a too high organic solvent content in the ink.

### <Resin>

The ink jet ink composition according to the invention may comprise a resin. The resin is often added to the ink jet ink formulation to achieve a good adhesion of the pigment to the paper substrate and a good abrasion resistance. The resin is preferably a polymer and suitable resins can be an acrylic based resin, a polyester resin, a urethane resin or a wax.

The polyurethane resin is to be incorporated in the ink formulation as a dispersion and may be selected from the group consisting of aliphatic polyurethane dispersions, aromatic polyurethane dispersions, anionic polyurethane dispersions, non-ionic polyurethane dispersions, aliphatic polyester polyurethane dispersions, aliphatic polycarbonate polyurethane dispersions, aliphatic acrylic modified polyurethane dispersions, aromatic polyester polyurethane dispersions, aromatic polycarbonate polyurethane dispersions, aromatic acrylic modified polyurethane dispersions, for example, or a combination of two or more of the above.

A preferred urethane resin to be used as dispersion in the ink of the invention is a polyester resin including a structural unit containing a urethane bond. Among such resins, a water-soluble or water-dispersible urethane-modified polyester resin is preferred. It is preferable that the urethane-modified polyester resin include at least one structural unit derived from a hydroxyl group-containing polyester resin (polyester polyol) and at least one structural unit derived from an organic polyisocyanate.

A preferred polyurethane resin to be included in the ink of the invention is a polyurethane resin obtainable by reacting a polyester polyol, a polyether diol, a polyol containing an anionic group and a polyisocyanate. A particular preferred polyurethane resin is a polyurethane resin obtainable by reacting a polyester polyol, a polyether diol, a polyol containing an anionic group and a polyisocyanate, and wherein the polyester polyol is obtained by reacting an aromatic polycarboxylic acid and a polyol. Examples of suitable polyurethane resins and their preparations are disclosed in the patent application EP3532545A.

Some examples of suitable polyurethane dispersions are NEOREZ R-989, NEOREZ R-2005, and NEOREZ R-4000 (DSM NeoResins); BAYHYDROL UH 2606, BAYHYDROL UH XP 2719, BAYHYDROL UH XP 2648, and BAYHYDROL UA XP 2631 (Covestro); DAOTAN VTW 1262/35WA, DAOTAN VTW 1265/36WA, DAOTAN VTW 1267/36WA, DAOTAN VTW 6421/42WA, DAOTAN VTW 6462/36WA (Allnex); and SANCURE 2715, SANCURE 20041, SANCURE 2725 (Lubrizol Corporation), for example, or a combination of two or more of the above.

Acrylic based resins include polymers of acrylic monomers, polymers of methacrylic monomers, and copolymers of the aforementioned monomers with other monomers. These resins are present as a suspension of particles having an average diameter of about 30 nm to about 300 nm. The acrylic latex polymer is formed from acrylic monomers or methacrylic monomer residues. Examples of monomers of the acrylic latex polymer include, by way of illustration, acrylic monomers, such as, for example, acrylate esters, acrylamides, and acrylic acids, and methacrylic monomers, such as, for example, methacrylate esters, methacrylamides, and methacrylic acids. The acrylic latex polymer may be a homopolymer or copolymer of an acrylic monomer and another monomer such as, for example, a vinyl aromatic monomer including, but not limited to, styrene, styrene butadiene, p-chloromethylstyrene, divinyl benzene, vinyl naphthalene and divinylnaphthalene.

Some examples of suitable acrylic latex polymer suspensions are, JONCRYL 537 and JONCRYL 538 (BASF Corporation, Port ArthurTX); CARBOSET GA-2111, CARBOSET CR-728, CARBOSET CR-785, CARBOSET CR-761, CARBOSET CR-763, CARBOSET CR-765, CARBOSET CR-715, and CARBOSET GA-4028 (Lubrizol Corporation); NEOCRYL A-1110, NEOCRYL A-1131, NEOCRYL A-2091, NEOCRYL A-1127, NEOCRYL XK-96, and NEOCRYL XK-14 (DSM); and BAYHYDROL AH XP 2754, BAYHYDROL AH XP 2741, BAYHYDROL A 2427, BAYHYDROL A2651 (Bayer), Mowinyl 6899D and 6969D, 6800, and 6810 (Japan Coating Resin Co. Ltd.) or a combination of two or more of the above.

The concentration of the resin in the ink jet ink according to the invention may be at least 1 wt.% and preferably lower than 30 wt.%, more preferably lower than 20 wt.%.

The aqueous inkjet ink of the invention may also comprise a wax. The wax in the ink improves wet rub or wet scratch resistance of the printed layer.

Generally, any suitable wax may be used in the ink. As such, the wax may be polyethylene waxes, petroleum waxes, paraffin waxes, carnauba waxes, polypropylene waxes, crystalline and microcrystalline waxes, amide waxes (oleamide, stearamide, erucamide, cyclic amide, etc... ), and combinations thereof. In an aspect of the invention, the wax may be a high density polyethylene wax.

In an aspect of the invention, the wax may be a polyethylene wax or modified paraffin wax. An example of polyethylene wax includes high density polyethylene (HDPE) wax, which has a density ranging from about 0.93 g/mL to 0.97 g/mL.

An example of modified paraffin wax particles includes paraffin wax that has been modified to improve dispersibility in water, e.g., via emulsification. The modified paraffin wax may be surface modified, chemically modified, etc.

Some specific examples of wax that may be used include those of the JONCRYL Wax series (such as JONCRYL Wax 22, JONCRYL Wax 26, and JONCRYL Wax 120 available from BASF Corp.), those of the AQUACER series (such as AQUACER 498, AQUACER 501, AQUACER 505, AQUACER 513, AQUACER 530, AQUACER 531, AQUACER 535, AQUACER 537, AQUACER 539, and AQUACER 552 available from BYK-Gardner, Columbia, Md. ) and Liquilube 404E from Lubrizol .

The wax may be present in the ink in an amount ranging from 1 to 30 wt. %, more preferably from 3 to 25 wt. %, relative to the total solids weight of the ink.

The ink jet ink composition according to the invention may comprise a capsule. Capsules, more preferably, nanocaps are often incorporated in ink jet ink formulations to encapsulate colouring agents (US2009227711A, JP2004075759) or to encapsulate reactive ingredients which can crosslink. Particularly useful are the nanocaps disclosed in WO2015158649 [0037-0110]: The nanocaps have a polymeric shell surrounding a core containing reactive chemistry. The shell material includes polyureas, polyurethanes, polyesters, polycarbonates, polyamides, melamine based polymers and mixtures thereof, with polyureas and polyurethanes being especially preferred. Other particularly useful nanocaps are disclosed in WO2016165970 [0051-0138]: the nanocaps are self-dispersable and include a dispersing group covalently coupled to the shell polymers. Other suitable nanocaps which can be incorporated in the aqueous inkjet used are disclosed in WO2022/268645.

The capsules are preferably present in the inkjet ink in an amount of no more than 30 wt.%, preferably between 2 and 25 wt.% based on the total weight of the ink.

### <Additives>

A biocide may be added to the aqueous inkjet ink of the invention to prevent unwanted microbial growth, which may occur over time. The biocide may be used either singly or in combination. Suitable biocides for the ink-jet ink of the present invention include sodium dehydroacetate, 2-phenoxyethanol, sodium benzoate, sodium pyridinethion-1-oxide, ethyl p-hydroxybenzoate and 1,2-benzisothiazolin-3-one and salts thereof.

Preferred biocides are Promex Clear available via Chemventis, ProxelTM GXL and ProxelTM Ultra 5 available from ARCH UK BIOCIDES and BronidoxTM available from COGNIS.

A biocide is preferably added to the aqueous medium in an amount of 0.001 to 3 wt.%, more preferably 0.01 to 1.0 wt. %, each based on the total weight of the ink.

### A.2. Continuous paper web

The production method of printed corrugated card board according to the invention is particularly suitable for in-line digital printing wherein the paper substrate to be printed is provided as a continuous paper web, preferably wounded off from a roll.

The paper in the continuous paper web which is used in the method according to the invention is not particularly limited to a specific type and may preferably be absorbing or low absorbing.

Absorbing paper substrates include paper, coated paper, coated paper having an ink receiving layer on at least one surface, offset paper, office paper, newspaper paper, card board, white lined chipboard, folding board.

For packaging applications absorbing paper substrates include card board, paper lines, and paper. The paper can be a single layer of a multilayer paper. The paper liner may be brown kraft liner, top kraft liner, white coated kraft liner or bleached paper board.

The absorbing paper substrate may be manufactured from chemical, wood, or recycled fibre. Typical substrates made from virgin fibres are kraft liners, substrates made from recycled fibres are test liners.

In a preferred embodiment of the invention, the paper may be a liner intended for printing before entering the corrugator to be converted into corrugated boards or boxes. In this aspect, the liner paper may be used as a double face liner and may be converted directly in a corrugator or laminated onto a double face liner after corrugation.

The term 'cardboard liners' refers to paper (as sheets or web), folding-carton board, the top-liner of corrugated-carton boards, and the top-liner of corrugated boards.

The method according to the invention is also suitable for low absorbing paper substrates such as a coated cardboard liner. The coating on the card board may be present for aesthetic purposes but may also reduce the ink absorption in the gaps between the cellulose fibres of the paper leading to an higher image quality. A too high ink absorption by the gaps between the paper fibres results in an insufficient colour density due to insufficient colorants present at the surface of the paper liner and a too high absorption by the fibres leads to feathering of ink resulting in unsharp edges between different colors and between printed areas and unprinted areas.

The coating applied on coated paper and coated cardboard liners to improve image quality may comprise resins such as poly styrene acrylic binders. One of the effects of these resins is to limit the absorption of the ink drops into the cardboard liner. This leads to low-absorbability coated papers and cardboard liners being a "recording medium of which the quantity of water absorption from the start of contact to 30 ms^{1/2} is 10 ml/m² or less according to the Bristow method ". The Bristow method is widely used as a method for measuring the liquid absorption amount in a short period of time and has been adopted by Japan Technical Association of the Pulp and Paper Industry (Japan TAPPI). The details of the testing method are described in the standard No. 51 "Paper and Paperboard-liquid absorbability testing method-Bristow method" of the "JAPAN TAPPI paper and pulp testing method 2000 version".

Another effect of binders present into the surface of coated paper and cardboard liners is that the surface energy can be relatively low, such as from 20 mJ/m² or more and 60 mJ/m² or less. This reduced surface energy hampers a good spreading of the aqueous inkjet ink drops. It is believed that also the relatively low surface energy of non-absorbing substrates comprising plastics, hampers the good spreading of the aqueous inkjet ink drops. The recording method according to the invention is particularly suitable to provide even and homogenous solids in the printed image on substrates having a low surface energy, at an excellent level of ink bleeding.

The method according to the invention is useful for continuous paper web width of 1.2 m, 1.6 m, 2.8 m and even up to 3.5 m. Especially, corrugators require a paper web width of 2.8 m.

### A.3. Conveying speed of the continuous paper web

The method according to the invention can be applied at a wide range of conveying speeds of the continuous paper web.

In a preferred embodiment, the conveying speed at standard printing speed of the press wherein the method of the invention is to be applied, is not less than 100 m/min, preferably not less than 250 m/min, most preferably not less than 350 m/min. These conveying speeds correspond with conveying speeds used in digital web presses and corrugators. Some corrugators operate at peak conveying speeds of 450 m/min.

Even at these extremely high conveying speeds, the aqueous inkjet ink as described in § A.1. does not show setoff onto the face rollers and the printed images do not smear out if contacted with heated plates present in the corrugators.

### A.4. Adhering an aqueous ink onto a first surface of the paper web

The adhering of the aqueous inkjet ink as in the method according to the invention is preferably performed by means of an inkjet print head.

Once the aqueous inkjet ink is adhered onto a first surface of the paper web, the ink is preferably dried, and a printed paper web is obtained. In another embodiment, an overprint varnish is applied before the ink is dried. This overprint varnish may be applied by a coating technique or by a jetting technique.

The drying of the adhered ink can be performed by applying an air flow and or apply heat. The application of heat is then performed by using heat sources such as for forced-air heating, radiation heating such as IRradiation, including NIR-, CIR- and SWIR radiation, conduction heating, high-frequency drying, RF, ultrasonic and microwave drying.

### A.5. Joining the printed paper web together with a corrugated paper medium.

In a third step of the method according to the invention, the printed paper web is joined together with a corrugated paper medium such as to form a printed single faced corrugated card board also called corrugated card board web. In another embodiment of the invention, the printed paper web is joined together with the corrugated paper medium which may be provided as a single faced corrugated card board web or a multifaced corrugated card board web such as to form respectively either a double faced card board web or a multi faced card board web.

The joining step is preferably performed in a corrugator or corrugated card board production line. Steps i) and ii) of the method according to the invention can be performed off-line, wherein the printed paper web is wounded on a roll and transported to the corrugator. In another preferred embodiment of the invention, steps i) and ii) can be integrated in a corrugator or corrugated card board production line.

The joining of the printed paper web together with a corrugated paper medium is done by contacting the surface opposite to the first surface of the printed paper web with a surface of the corrugated paper medium. If the corrugated paper medium is provided as a single faced corrugated card board (also called a corrugated card board web), the surface opposite to the first surface of the printed paper web is contacted with the corrugated side of the corrugated paper medium.

Prior to the contacting of the surface opposite to the first surface of the printed paper web with the corrugated side the corrugated paper medium, a glue is preferably applied onto the tips of the corrugated paper medium.

In a preferred embodiment of the invention, the contacting of the surface opposite to the first surface of the printed paper web with a surface of the corrugated paper medium by pressing the printed paper web with the corrugated paper medium in a gap between a pressing roller and a corrugating roller.

In another preferred embodiment of the invention, the contacting of the surface opposite to the first surface of the printed paper web with a surface of the corrugated paper medium by pressing the printed paper web with the corrugated paper medium by means of a heating and pressing device comprising heating plates and an endlessly driven pressure belt.

### A.5. Contacting the printed substrate with a transport roller

The recording method according to the invention may contain a transporting step of the printed paper substrate following to the adhering step of the inkjet ink. This transporting step is done by means of a transport roller wherein the outer surface of the transport roller (also called face roller) may contact the first surface of printed paper.

Extremely high conveying speeds make the time laps between adhering the aqueous inkjet ink, more particularly the last adhering step if more than one inkjet printhead is used, and the contact of the face roller with the printed paper substrate very short. Typically, the time between the adhering step of the ink or the last adhering step of the ink if more than one inkjet printhead is used, and the contact of the face roller with the first surface of the printed paper substrate in the recording method according to the invention is not more than 10 seconds, preferably not more than 3 seconds, most preferably not more than 1 second.

### A.6. Application of a pre-treatment liquid

The production method according to the invention may also include a step of applying an aqueous pre-treatment liquid comprising a fixing agent onto the first surface of the continuous paper web, prior to the adhering of the aqueous ink. The application of a pre-treatment liquid may be performed by any method such as a coating method, being a knife coating, doctor blade coating or dip-coating or a printing method such as a flexographic printing method or a jetting method such as inkjet printing.

### <Fixing agent>

The fixing agent present in the pre-treatment composition is preferably a multivalent metal salt, a cationic polymer or an organic acid. The fixing agent serves to crash, precipitate or destabilize the ink colorants and hence fix them to the substrate. This leads to an improved image quality (less bleeding, less coalescence).

The polyvalent metal salt may be present in the pre-treatment composition to improve inkjet print quality. Generally, the polyvalent metal salt may be any water-soluble polyvalent metal salt. In specific examples, the polyvalent metal salt may include calcium chloride (CaCl₂), magnesium chloride (MgCl₂), magnesium sulfate (MgSO₄), aluminium chloride (AlCl₃), calcium nitrate (Ca(NO₃)₂), magnesium nitrate (Mg(NO₃)₂), magnesium acetate (Mg(CH₃COO)₂), zinc acetate (Zn(CH₃COO)₂) calcium propionate (Ca(C₂H₅COO)₂), or a combination thereof. In a particular example, the polyvalent metal salt may be calcium chloride. In further examples, the polyvalent metal salt may include a metal cation selected from calcium, copper, nickel, magnesium, zinc, barium, iron, aluminium, chromium, or another polyvalent metal.

In some cases, the polyvalent metal salt may be present in an amount from 1 wt. % to 99 wt. % with respect to the entire weight of the pre-treatment composition. In more specific examples, the polyvalent metal salt may be present in an amount from 5 wt. % to 65 wt. %, more preferably from 25 wt. % to 60 wt. %, with respect to solids content of the pre-treatment composition. If the amounts are below the lower limits, insufficient fixing of the colorants occur resulting in a reduced image quality.

Polymeric cationic polymers, suitable as fixing agent in the pre-treatment composition contain either guanidinium or fully quaternized ammonium functionalities, such as quaternized polyamine copolymers. Generally, the weight average molecular weight (Mw) of the cationic polymer allows viscosity less than 25 cP at 25°C, as measured on a Brookfield viscometer. Typical Mw are less than 500.000 g/mol, and in one aspect, less than 50.000 g/mol.

Suitable classes of cationic polymers that can be used include, but are not limited to, quaternized polyamines, dicyandiamide polycations, diallyldimethyl ammonium chloride copolymers, quaternized dimethylaminoethyl(meth)acrylate polymers, quaternized vinylimidizol polymers, alkyl guanidine polymers, alkoxylated polyethylene imines, and mixtures thereof.

The application of the pre-treatment liquid to the paper substrate prior to the adhering of the aqueous ink jet can be done by a coating technique such as screen printing, flexographic printing, dip coating, knife coating, doctor blade coating or via a jetting technique.

Depending on the application method of the pre-treatment liquid, additives such as thickeners may be added to the liquid to make the viscosity of the pre-treatment liquid matching the required viscosity range of the dedicated application method.

Suitable thickeners for applying the pre-treatment liquid via a screen or flexographic printing method are methylcellulose (MC) or hydroxypropyl methylcellulose (HPMC) polymers.

### B. Apparatus for performing the image recording method.

Apparatus for performing the production method according to the invention comprises (i) a transport mechanism for providing a continuous paper web to the (ii) means for adhering the aqueous inkjet ink onto the first surface of this continuous paper web and (iii) transport rollers placed downstream the conveying direction of the paper paper (iv) means for joining the printed paper web together with a corrugated paper medium.

As the method according to the invention is useful for paper substrate web widths of 1.2 m, 1.6 m, 2.8 m and even up to 3.5 m., the width of the different components of the apparatus is at least larger than 1.2 m, 1.6 m, 2.8 m and even up to 3.5 m respectively.

### (i) The transport mechanism

The transport mechanism for providing a continuous paper web is not particularly limited but comprises preferably means for wounding off the roll of a continuous paper web and a conveyer belt, a vacuum conveyer belt, a composition of one or more transport rollers.

### (ii) The means for adhering the aqueous inkjet ink

The means for adhering the aqueous inkjet ink according to the invention is not particularly limited but comprises an impression cylinder and an inkjet printhead, preferably more than one printhead positioned around the impression cylinder. The inkjet printhead may be arranged into a shuttle (multi pass system) or into a line, preferably a page wide array, also called line type inkjet printhead (single pass system). Page wide arrays having a width of at least 1.2 m, 1.6 m, 2.8 m and even up to 3.5 m make single pass printing possible.

As the production method according to the invention is very suitable for high conveying speeds, a line type inkjet printhead (also called print bar) is particularly suitable as this guarantees high printing speeds matching these conveying speeds.

To achieve printed images having a high image quality, the inkjet ink drop resolution of the inkjet printhead should be preferably equal to 225 drops/inch or more, more preferably equal to 300 drops/inch or more, most preferably equal to 1200 drops/inch or more. Most actual commercial inkjet printheads have a nozzle density of 1200 nozzles/inch or more along a first axis corresponding with the longest dimension of the nozzle plate of the inkjet printhead. The inkjet printheads may be arranged in an array along this first axis. This array forms a printing bar which is positioned above the first surface of the continuous paper web according to a direction perpendicular to the conveying direction of the paper substrate.

In the conveying direction, due to the extremely high conveying speeds, the required drop resolution is achieved by sufficient high jetting frequencies of the printhead. For example, at a conveying speed of 450m/min, set by the corrugator, corrugated board production line, digital web press or offset press, a drop resolution of only 225 dpi can be achieved at a jetting frequency of 66.4kHz per inkjet printhead. This jetting frequency corresponds to an upper limit where the jetting reliability of commercial printheads is guaranteed. In future, inkjet heads with shorter acoustic lengths will allow higher jetting frequencies and higher printing speeds. At these conveying speeds, the maximal ink coverage for a typical drop mass between 5 and 10 ng is between 2.1 and 4 g/m² (assuming a drop resolution of the inkjet printhead of 1200 drops/inch) which is insufficient to obtain solids in the printed images of sufficient color density.

As the jetting frequency of commercially available inkjet printheads is limited at which jetting reliability is guaranteed, the required drop density per ink in the conveying direction can be obtained by the use of 2 or more inkjet printheads placed such that their first axis are parallel and perpendicular to the paper conveying direction.

This configuration has the advantage that, e.g. in case of 2 print heads in parallel, due to the doubled drop density, the maximal ink coverage per color for a typical drop mass between 5 and 10 ng is between 4.2 and 8 g/m² (assuming a drop resolution of the inkjet printhead of 1200 drops/inch), which is within the required range to obtain sufficient image density.

An impression cylinder is particularly suitable for a continuous paper web which is being transported over the outer surface of the cylinder. Indeed, the dimensional stability of the paper substrate containing aqueous ink adhered onto its surface is much more guaranteed than with a conveyor belt or a combination of transport rollers in a curved configuration. As specially the width of the page wide array for a printing unit to be incorporated in a corrugator must be preferably equal to or larger than 1.6 m, 2.8 m or even 3.5 m, this dimensional stability of the paper substrate web is very critical. A suitable example how the inkjet printheads can be positioned around an impression cylinder is disclosed in Fig. 1 of US 2002/0168212 A1. Another advantage of an impression cylinder for transporting and providing the paper substrate web when adhering an aqueous inkjet ink according to the invention is that the design of the printing unit is much more compact.

Therefore, to achieve a high compact design of the printing unit, the inkjet printhead(s) should be preferably positioned such as to wrap around a curved support or impression cylinder carrying the paper substrate during the adhering of the aqueous ink.

A preferred ink jet printhead for the jetting of the aqueous inkjet ink is a piezoelectric ink jet printhead. Piezoelectric inkjet jetting is based on the movement of a piezoelectric ceramic transducer when a voltage is applied thereto. The application of a voltage changes the shape of the piezoelectric ceramic transducer in the print printhead creating a void, which is then filled with aqueous inkjet ink. When the voltage is again removed, the ceramic expands to its original shape, ejecting a drop of pre-treatment liquid from the ink jet printhead. However, the jetting of the ink according to the present invention is not restricted to piezoelectric inkjet printing.

Particularly suitable piezoelectric inkjet printheads are Gen5 and Gen5S from RICOH, KJ4B from KYOCERA, Samba G3L and G5L from FUJIFILM DIMATIX and the 5601print head from XAAR.

Other inkjet print heads can be used and include various types, such as a continuous type, a thermal print head type, a Memjet-type of head and a valve jet type.

In a preferred embodiment, the inkjet printhead may be configured to recirculate the aqueous ink prior to printing. A particularly useful inkjet printhead to print the aqueous inkjet ink of the invention, is from the type that includes a recirculation of the ink within the printhead such as through-flow printheads as disclosed in WO 2006/030235 A2 and WO 2006/064036 A1. This type of inkjet printhead is very suitable to be incorporated in a printing system comprising a through-flow print head having one or more nozzles for ejecting drops of the aqueous ink. The ink circulation system for feeding and circulating the ink through the print head, comprises an ink tank for containing the ink, a supply buffer tank for receiving the ink from the main tank and supplying the ink to the through-flow print head, a return manifold for receiving the ink from the through-flow print head and returning the ink to the main ink tank via a pump.

Commercial examples of suitable piezoelectric through-flow print heads are the print heads Samba G3L and G5L from FUJIFILM DIMATIX, Ricoh Gen5F and MF heads, Epson (D3000) throughflow heads and the 5601 print-head from XAAR.

### (iii) Transport roller

The printing unit according to the invention may comprise a roller present in downstream direction of the moving paper substrate to transport the printed paper web to the means for joining the printed paper web together with a corrugated paper medium.

The outer surface of the face roller can be made of any material, but it is particularly beneficial to have transport rollers having an outer surface of metal such as stainless steel, chrome or copper. This outer surface material guarantees mechanical stability and resistance to wear and scratches occurring during the contacting with the first surface of the paper substrate.

In Fig. 1, a heating and pressing device is shown for contacting the surface opposite to the first surface of the printed paper web with a surface of the corrugated paper medium by pressing the printed paper web with the corrugated paper medium by means of an endlessly driven pressure belt. This device, also called a single face liner corrugator, has an endless driven pressure belt wherein the belt assembly contains an endless fluted conveyor belt (102) which is driven by a drive mechanism having a motor (not shown). The conveyor belt (102) is pressed onto a support surface which span: across the width of the corrugator and along the length of the surface (111) in the direction in which the newly glued single face paperboard travels.

The linear single face corrugator has a corrugating roller (106) which holds a paper web to be corrugated (180) against the endless fluted conveyor belt (102) as the paper (180) enters the corrugator.

After exiting the corrugating roller (106) the corrugated paper medium preferably has a controlled amount of glue (not shown) applied via a glue roller (108).

The printed paper web (181) is directed via a face roller (113) to a redirect bar (110) and is feed between the endless fluted conveyor surface (102) and the associated support surface (111). The redirect bar (110) apply pressure to the corrugated paper medium and the printed paper web to contact them until a printed corrugated card board web is formed.

Additionally, the heat from a heater (112) helps set the glue which will hold the corrugated paper medium to the printed paper web to form a printed corrugated card board web (182).

In Fig. 2, a device is shown for contacting the surface opposite to the first surface of the printed paper web with a surface of the corrugated paper medium and comprising heating plates and an endlessly driven pressure bel. In this device, the printed paper web (181) is contacted to the corrugated paper medium (49) which can be wound off a supply roll. Having been wound off, the corrugated paper medium (180) is guided through adjacent corrugating rollers (not shown) in order to produce a corrugation. Prior to the contacting the printed paper web and the corrugated paper medium may be pre-heated through a preheating device (50).

The preheating device (50) comprises two heatable heating rollers (61) arranged one above the other. The corrugated paper medium (49) and the printed paper web (181) move one above the other in such a way as to partly surround the respective heating rollers (61). Downstream of the preheating device (50), a gluing device (62) is arranged which comprises a gluing roller (63) part of which is immersed in a glue bath (64). The corrugated paper medium (49) is in contact with the gluing roller (63).

Downstream of the gluing device (62), a heating and pressure device is arranged which comprises a horizontal table comprising heating plates, the table extending in the working direction. An endlessly driven pressure belt is provided above the heated table (66) which pressure belt (68) is preferably deflected via three rollers. Between the pressure belt and the table, a pressure gap is formed through which the corrugated paper medium and the printed paper web are guided so as to be pressed together. The heating and pressing device is used to produce a printed corrugated cardboard web (182).

### C. Examples

### C.1. Materials

All materials used in the following examples were readily available from standard sources such as Aldrich Chemical Co. (Belgium) and Acros (Belgium) unless otherwise specified.
- **Surfynol 104PG50** is a 50 wt.% solution of 2,4,7,9-Tetramethyl-5-decyne-4,7-diol in propylene glycol from Evonik
- **Hydropalat WE 3650** is a modified ethoxylate surfactant from BASF
- **HSD KX1** is a black pigment dispersion from Lubrizol Corp.
- **CO4107K** is a self-dispersible black pigment from Cabot Corp
- **Thickener-1** is BYK LP-R21675 from BYK Corp.
- **Thickener-2** is a 1.5 % aqueous solution of Methocel 311 from Dupont
- **Tego wet 280** is a polyether siloxane supplied by Evonik Industries
- **Surfynol 465** is an acetylene glycol surfactant from Evonik Indurstries
- **Brij S20** is a polyoxyethylene (20) stearyl ether **from Croda**
- **Brij S10** is a polyoxyethylene (10) stearyl ether **from Croda**
- **Brij S100** is a polyoxyethylene (100) stearyl ether **from Croda**
- **Rokanol K21** is a mixture of ethoxylated C₁₆₋₁₈ and C₁₈ unsaturated alcohols from PCC Exol
- **Rokanol O20** is an ethoxylated oleyl alcohol from PCC Exol
- **Joncryl 669** is an acrylic emulsion from BASF
- **Joncryl 1680** is a styrene-acrylic emulsion from BASF
- **Joncryl DPS 3771** is an acrylic emulsion from BASF
- **Nanobyk 3860** is a dispersion of zinc oxide nanoparticles from BYK
- **Resin 1000H** is styrene maleic anhydride copolymer from Cray Valley
- **Joncryl 538** is a styrene-acrylic emulsion from BASF
- **Polyox WSR-N750** is a 5.5% solution of Polyox WSRN750, a polyethylene glycol supplied by Dow
- **Pluronic PE10500** is a block copolymer of ethylene oxide and propylene oxide supplied by BASF
- **Aquacer 593** is a 30 wt.% of a polypropylene wax supplied by BYK
- **Aquacer** 2700 is a non-ionic emulsion based on a Fischer Tropsch wax supplied by BYK
- **Varnish** is UNILAC PREPRINT OPV M2 from Siegwerk
- **D.I.water** is deionized water
- **SUBST-1** is a RiegerCoat economic double coated testliner of 180 g/m² from Hamburger Containerboard
- **SUBST-2** is Austroliner 3 an uncoated 135 gsm brown test liner from Hamburger Containerboard having a Gurley porosity of 43.9 s.

### C.2. Evaluation methods

### C.2.1. Preparation of samples of ink coatings for heat resistance test

Pre-treatment liquid was coated onto a paper liner by means of a 4 µm spiral bar coater using a vacuum coating table from Elcometer. The coated pre-treatment liquid was dried for 1 minute at 60°C.

Onto the dried pre-treatment coating, an aqueous ink composition was coated onto a paper liner by means of a 10 µm spiral bar coater using the same vacuum coating table. The coated ink was dried for 1 minute at 60°C.

In case of coated liners, as is SUBSTR-1, onto the dried pre-treatment plus ink coating or ink, a commercial varnish was coated onto a paper liner by means of a 4 µm spiral bar coater using a vacuum coating table from Elcometer. The coated varnish was dried for 5 minutes at 60°C

### C.2.2. Preparation of samples with printed images for heat resistance test

In a first step, card board liners are coated as described in §C.2.1. The coated cardboard liners were introduced in an experimental single pass printer (fixed line head) equipment at a conveying speed of 500 mm/s using CMY inks.

In the experimental single pass printer equipment, an image containing primary and secondary color patches is printed by adhering an aqueous inkjet ink onto the coated card board liner with an inkjet print head (Ricoh Gen 5S printhead, ejecting drops of 5 ng/ drop) in a single pass mode at an ink lay down of 5.03 mL/m².

The printed images were dried for 5 minutes in an oven at 60°C.

### C.2.3. Jetting reliability

The inkjet inks were jetted via a Ricoh Gen 5s printhead at 23.6 kHz and at 25°C. The number of required purges to achieve a reliable start of jetting (= number of required purges before start to get a good starting condition of the nozzles) and a reliable continuous jetting (= number of purges during print test) was recorded.

### C.2.4. Heat resistance test

Heat resistance of printed images was evaluated by an iron test. An AEG Easyline 220 W iron was filled with water (for reason of weight) and set as to have a surface temperature of 200°C, while steaming function was turned off. A corrugated board is used as an underlayer of the printed paper. The print is ironed (one way) for 40 times, after which the smear out of the ink is visually assessed. The heat resistance is evaluated according to the criteria as listed in Table 1.

**Table 1: Evaluation criteria for heat resistance of ink coatings and printed images**

| Criteria | Score |
|---|---|
| No visual smearing out of ink on white zones next to print /no or very limited image damage | 0 |
| Traces of ink smear out in white zones next to print / limited image damage | 1 |
| Considerable smear out of ink in white zones next to print / considerable image damage | 2 |
| Medium smear out of ink in white zones next to print | 3 |
| High smear out of ink in white zones next to print | 4 |
| Very high smear out of ink in white zones next to print | 5 |

### C.3. Ink and pre-treatment liquid preparations

Comparative and inventive aqueous inks were prepared by diluting the pigment dispersions with the ingredients according to Table 2 and Table 3. The amounts of the dispersion and ingredients are expressed in wt.% based on the total weight of the ink. D.I.-water was added to complete the ink to the desired pigment concentration.

**Table 2: Comparative and inventive ink compositions.**

| Compound | COMP-INK1 | COMP-INK2 | INV-INK1 | INV-INK2 | INV-INK3 | INV-INK4 | INV-INK5 |
|---|---|---|---|---|---|---|---|
| HSD KX1 | 20.62 | 20.62 | 20.62 | 20.62 | 20.62 | 20.62 | 20.62 |
| 1,2-propane diol | 10.00 | 10. 00 | 10.00 | 9.00 | 9.00 | 9.00 | 9.00 |
| n-butanol | 2.96 | 2.96 | 2.95 | 2.96 | 2.96 | 2.96 | 2.96 |
| Thickener-1 | 1 | 1 | 0.075 | 0.5 | 0.5 | 0.5 | 0.25 |
| Tego Wet 280 | 0.5 | 0 | 1.0 | 0 | 0 | 0 | 0 |
| Brij S20 | - | - | 1.0 | - | - | - | - |
| Brij S100 | - | - | - | 1.0 | - | - | - |
| Rokanol K21 | - | - | - | - | 1.0 | - | - |
| Rokanol O20 | - | - | - | - | - | 1.0 | 2.0 |
| Surfynol 465 | 0.5 | 1 | 0.5 | 1.0 | 1.0 | 1.0 | 1.0 |
| Proxel K | 0.2 | 0.2 | 0.2 | 0.2 | 0.2 | 0.2 | 0.2 |
| D.I.water | Up to 100 wt.% | Up to 100 wt.% | Up to 100 wt.% | Up to 100 wt.% | Up to 100 wt.% | Up to 100 wt.% | Up to 100 wt.% |

**Table 3: Inventive ink compositions.**

| Compound | INV-INK6 | INV-INK7 | INV-INK8 | INV-INK9 | INV-INK10 | INV-INK11 |
|---|---|---|---|---|---|---|
| HSD CX1 | 12.5 | - | - | 12.5 | - | - |
| HSD MX1 | - | 23.68 | - | - | 23.68 | - |
| HSD YX1 | - | - | 19.79 | - | - | 19.79 |
| 1,2-propane diol | 7.50 | 7.50 | 7.50 | 7.50 | 7.50 | 7.50 |
| n-butanol | 2.96 | 2.96 | 2.96 | 2.96 | 2.96 | 2.96 |
| BRIJ S10 | 3.0 | 3.0 | 3.0 | 1.0 | 1.0 | 1.0 |
| Thickener-1 | - | - | - | 0.6 | 0.6 | 0.6 |
| Surfynol 465 | 1.0 | 1.0 | 1.0 | 1.0 | 1.0 | 1.0 |
| Proxel K | 0.2 | 0.2 | 0.2 | 0.2 | 0.2 | 0.2 |
| D.I.water | Up to 100 wt.% | Up to 100 wt.% | Up to 100 wt.% | Up to 100 wt.% | Up to 100 wt.% | Up to 100 wt.% |

Aqueous pre-treatment liquids were prepared by mixing the compounds as listed in Table 4.

**Table 4: Pre-treatment liquid compositions.**

| Compound | PL-1 | PL-2 | PL-3 | PL-4 | PL-5 | PL-6 |
|---|---|---|---|---|---|---|
| Mg(NO₃)₂ | 15.0 | 15.0 | 15.0 | 20.0 | 20.0 | 15.0 |
| Joncryl 669 | 13.64 | - | - | - | - | - |
| Joncryl 1680 | - | 13.79 | - | - | - | - |
| Joncryl DPS 3771 | - | - | 12.77 | - | - | - |
| Joncryl 538 | - | - | - | - | - | 12.92 |
| Polyox WSRN75 | - | - | - | - | - | 35.0 |
| Pluronic PE10500 | 5.56 | 5.56 | 5.56 | - | - | 5.56 |
| Hydropalat WE 3650 | 1.0 | 1.0 | 1.0 | - | - | 1.0 |
| Vondic 1980 NE | - | - | - | 5.56 | 5.56 | - |
| Aquacer 593 | - | - | - | 7.0 | 7.0 | - |
| Tego Foamex 822 | 0.04 | 0.04 | 0.04 | 0.04 | 0.04 | 0.04 |
| K933 | 0.04 | 0.04 | 0.04 | 0.04 | 0.04 | 0.04 |
| Thickener-2 | - | - | - | 50.0 | 50.0 | - |
| Nanobyk 3860 | - | - | - | 0.625 | - | - |
| Resin 1000H | - | - | - | - | 2.775 | - |
| Aquacer 2700 | 2.5 | 2.5 | 2.5 | - | - | 10.0 |
| D.I.water | Up to 100 wt.% | Up to 100 wt.% | Up to 100 wt.% | Up to 100 wt.% | Up to 100 wt.% | Up to 100 wt.% |

### C.4. Evaluation of heat resistance of coated inks

The heat resistance was measured according to § C.2.4. onto the samples obtained as described in § C.2.1. The results of coatings performed onto SUBST-1 are listed in Table 5, the results of coatings performed onto SUBST-2 are listed in Table 6.

**Table 5: Heat resistance of aqueous inkjet ink coatings onto pre-treated card board liners.**

| Pre-treatment liquid | Ink | COMP/INV | Heat resistance |
|---|---|---|---|
| PL-1 | COMP-INK1 | COMP | 2.0 |
| PL-2 | COMP-INK1 | COMP | 3.0 |
| PL-3 | COMP-INK1 | COMP | 2.0 |
| PL-1 | INV-INK1 | INV | 0.0 |
| PL-2 | INV-INK1 | INV | 1.0 |
| PL-3 | INV-INK1 | INV | 0.0 |

**Table 6: Heat resistance of aqueous inkjet ink coatings onto uncoated card board liners.**

| Pre-treatment liquid | INK | COMP/INV | Heat Resistance |
|---|---|---|---|
| PL-5 | COMP-1 | COMP | 2.0 |
| PL-5 | INV-INK2 | INV | 1.0 |
| PL-5 | INV-INK3 | INV | 1.0 |
| PL-5 | INV-INK3 | INV | 1.0 |
| PL-5 | INV-INK4 | INV | 1.0 |
| PL-5 | INV-INK6 | INV | 1.0 |

From Table 5 and Table 6 it can be observed that the inkjet inks containing a polyoxyethylene glycol alkyl ether shows a heat resistance which is sufficiently good to be a suitable candidate to be used in a corrugated card board production method.

### C.5. Evaluation of heat resistance and jetting reliability of printed inks

The heat resistance of the samples made according to § C.2.1. with the pre-treatment liquids from Table 4 and the inks from was measured according to § C.2.4. (heat resistance test).

Results of heat resistance measurements of printed images of the comparative inks could not be obtained as the jetting reliability was so poor that no workable image could be printed. The coatings of the pre-treatment liquids were performed onto SUBST-1 and SUBST-2. The results are listed in Table 7.

**Table 7: Jetting reliability of comparative and inventive ink sets and heat resistance of printed images thereof.**

| Card board liner | Pre-treatment liquid | Ink set | COMP/ INV | Heat resist. | Jetting reliability | |
|---|---|---|---|---|---|---|
| | | | | | # purges before start | # purges during print test |
| n.a. | PL-4 | COMP-INK2 | COMP | n.a. | unstable jetting - not tested | unstable jetting - not tested |
| SUBST-1 | PL-4 | INV-INK-9 + INV-INK-10+INVINK-11 | INV | - | <3 | 0 |
| SUBST-1 | PL-5 | INV-INK-9 + INV-INK-10+INVINK-11 | INV | - | <3 | 0 |
| SUBST-2 | PL-4 | INV-INK-9 + INV-INK-10+INVINK-11 | INV | 0 | <3 | 0 |
| SIUBST-2 | PL-5 | INV-INK-9 + INV-INK-10+INVINK-11 | INV | 0 | <3 | 0 |
| SUBST-1 | PL-4 | INV-INK-6 + INV-INK-7+INVINK-8 | INV | 0 | >=3 | >= 3 |
| SUBST-1 | PL-5 | INV-INK-6 + INV-INK-7+INVINK-8 | INV | 0 | >=3 | >= 3 |
| SUBST-2 | PL-4 | INV-INK-6 + INV-INK-7+INVINK-8 | INV | 0 | >=3 | >= 3 |
| SIUBST-2 | PL-5 | INV-INK-6 + INV-INK-7+INVINK-8 | INV | 0 | >=3 | >= 3 |

From Table 7 it can be seen that the inks comprising a polyoxyethylene glycol alkyl ether lead to images which show an increased heat resistance with respect to the inks not containing a polyoxyethylene glycol alkyl ether (as listed in Table 5). It can also be observed that inks containing both a polyoxyethylene glycol alkyl ether and a copolymer of a (meth)acrylic acid and an alkyl (meth)acrylate, do further show an improved jetting reliability and improved image quality for a same heat resistance of the printed image.

## Claims

1. A method of producing a printed corrugated cardboard including the steps of
i. Providing a continues paper web; and
ii. Adhering an aqueous ink onto a first surface of the paper web by means of an inkjet print head to obtain a printed paper web, the aqueous ink comprising a pigment, a polyoxyethylene glycol alkyl ether, a water-soluble organic solvent in an amount equal to 1.5 wt.% or more and equal to 37 wt.% or less with respect to the total weight of the ink; and
iii. Joining the printed paper web together with a corrugated paper medium by contacting the surface opposite to the first surface of the printed paper web with a surface of the corrugated paper medium.

2. The method according to claim 1 wherein the contacting is done by pressing the printed paper web together with a corrugated paper medium in a gap between a pressing roller and a corrugating roller.

3. The method according to any of the preceding claims wherein the contacting is done by pressing the printed paper web together with a corrugated paper medium by means of a heating and pressing device (65) comprising heating plates (66) and an endlessly driven pressure belt (68).

4. The method according to any of the preceding claims wherein the water-soluble organic solvent is an alkane diol.

5. The method according to Claim 4 wherein the amount of alkane diol is equal to 3 wt.% or more and equal to 13 wt.% or less with respect to the total weight of the aqueous ink.

6. The method according to any of the preceding claims wherein the pigment is selected from a group consisting of a self-dispersible pigment and a pigment encapsulated by means of a crosslinked polymer.

7. The method according to any of the preceding claims wherein prior to step ii), an aqueous pre-treatment liquid comprising a fixing agent is applied to the first surface of the paper web.

8. The method according to any of the preceding claims wherein the aqueous ink comprises a co-polymer of (meth)acrylic acid and alkyl (meth)acrylate, the co-polymer having an acid value equal to or more than 30 mg KOH/g of co-polymer.

9. The method according to Claim 8 wherein the alkyl (meth)acrylate is ethyl (meth)acrylate.

10. The method according to any of the preceding claims wherein glue is applied on a surface of the corrugated paper medium prior to the contacting.

11. The method according to any of the preceding claims wherein the continuous paper web in step (i) is provided onto an impression cylinder.

12. The method according to any of the preceding claims wherein the corrugated paper medium is a single faced corrugated card board web.

13. The method according to any of the preceding claims wherein the continues paper web is provided at a conveying speed not less than 250 m/min.

14. An ink set comprising an aqueous pre-treatment liquid and an aqueous inkjet ink, the aqueous pre-treatment liquid comprises a fixing agent and a thickener, the aqueous inkjet ink comprises a pigment, a polyoxyethylene glycol alkyl ether, a water-soluble organic solvent in an amount equal to 1.5 wt.% or more and equal to 37 wt.% or less with respect to the total weight of the ink.

15. The ink set according to Claim 14 wherein the thickener is selected from the group consisting of methylcellulose (MC) and hydroxypropyl methylcellulose (HPMC) polymers.
